# EUROPEAN PATENT APPLICATION

(11) **EP 4 489 506 A2**
(43) Date of publication of application: **08.01.2025**
(21) Application number: 24213523.4
(22) Date of filing: 01.08.2019
(51) Int. Cl.: H04W 76/10

(54) **BASE STATION, NETWORK NODE, AND COMMUNICATION METHOD**

(62) Divisional of application: 19939866.0
(71) Applicant: NTT DOCOMO, INC., Tokyo 100-6150 (JP)
(72) Inventor: Toeda, Teruaki, Tokyo, 100-6150 (JP); Inoue, Kazuya, Tokyo, 100-6150 (JP); Takahashi, Jo, Tokyo, 107-0052 (JP); Miyasaka, Akira, Tokyo, 107-0052 (JP)
(74) Representative: Hoffmann Eitle

(57) **Abstract**

A base station includes a receiver configured to receive a signal requesting setting of a radio bearer from a network node; and a controller configured to select one of a process of continuing performing of an E-UTRA-NR Dual Connectivity (EN-DC) process without setting the radio bearer or a process of stopping the performing of the EN-DC process and setting the radio bearer, in response to detecting that the EN-DC process that contends with the setting of the radio bearer is performed.

## Description

### TECHNICAL FIELD

The present invention relates to a base station, a network node, and a communication method in a radio communication system.

### BACKGROUND ART

In the 3rd Generation Partnership Project (3GPP), a radio communication scheme called 5G or New Radio (NR) (the radio communication scheme is hereinafter referred to as "5G" or "NR") has been studied in order to further increase a system capacity and a data transmission rate, and further reduce latency in a radio section. In 5G, various radio technologies have been studied in order to satisfy required conditions that makes latency in a radio section less than or equal to 1 ms while achieving throughput of 10 Gbps or more.

In E-UTRA-NR Dual Connectivity (EN-DC), a terminal is connected to one base station (eNB) of LTE, acting as a master node MN, and is also connected to a base station (en-gNB) of NR, acting as a secondary node SN. Herein, the en-gNB (hereinafter referred to as gNB) is a node that provides a terminal with NR user plane and control plane protocol terminations and functions as a secondary node of EN-DC. The eNB is connected to an Evolved Packet Core (EPC) via an S1 interface. The eNB is also connected to the gNB via the X2 interface. The gNB is connected to the EPC via the S1-U interface and to the other en-gNB via the X2-U interface.

### Related Art Document

### [Non-Patent Documents]

[Non-Patent Document 1] 3GPP TSG-RAN WG3 Meeting #104, R3-193013, Reno, NV, U.S., 13th-17th May 2019
[Non-Patent Document 2] 3GPP TSG-R_AN WG3 Meeting #104, R3-193094, Reno, NV, U.S., 13th-17th May 2019
[Non-Patent Document 3] 3GPP TS36.413 V15.6.0 (2019-07)
[Non-Patent Document 4] 3GPP TS37.340 V15.6.0 (2019-06)

### SUMMARY OF THE INVENTION

### [PROBLEM TO BE SOLVED BY THE INVENTION]

In EN-DC, in a case where the eNB performs the E-RAB modification procedure, Mobility Management Entity (MME) may initiate an E-RAB setup procedure for a voice call, for example. Thus, a race condition is assumed to occur between the E-RAB modification procedure performed by the eNB and the E-RAB setup procedure performed by the MME, and there is a need for a method to resolve the race condition.

### [MEANS FOR SOLVING THE PROBLEM]

According to an aspect of the present invention, there is provided a base station including
a receiver configured to receive a signal requesting setting of a radio bearer from a network node; and
a controller configured to select one of a process of continuing performing of an E-UTRA-NR Dual Connectivity (EN-DC) process without setting the radio bearer or a process of stopping the performing of the EN-DC process and setting the radio bearer, in response to detecting that the EN-DC process that contends with the setting of the radio bearer is performed.

### [ADVANTAGE OF THE INVENTION]

According to an embodiment, when the E-RAB modification procedure performed by the eNB contends with the E-RAB setup procedure performed by the MME, the contention can be resolved by prioritizing one of the procedures.

### BRIEF DESCRIPTION OF DRAWINGS

FIG. 1 is a diagram illustrating a configuration of a communication system according to the present embodiment;
FIG. 2 is a diagram illustrating an example of an EN-DC architecture.
FIG. 3 is a diagram illustrating an example of a secondary node addition procedure in the EN-DC.
FIG. 4 is a diagram illustrating an example of E-UTR_AN Radio Access Bearer (E-RAB) setup procedure.
FIG. 5 is a diagram illustrating an example of a process of Option 1-1.
FIG. 6 is a diagram illustrating another example of a process of Option 1-1.
FIG. 7 is a diagram illustrating an example of a process of Option 1-2.
FIG. 8 is a diagram illustrating another example of a process of Option 1-2.
FIG. 9 is a diagram illustrating an example of a process of Option 2-1.
FIG. 10 a diagram illustrating another example of a process of Option 2-1.
FIG. 11 is a diagram illustrating an example of a process of Option 2-2.
FIG. 12 is a diagram illustrating another example of a process of Option 2-2.
FIG. 13 is a diagram illustrating an example of a functional configuration of a terminal.
FIG. 14 is a diagram illustrating an example of a functional configuration of a base station.
FIG. 15 is a diagram illustrating an example of a functional configuration of an MME.
FIG. 16 is a diagram illustrating an example of a hardware configuration of a terminal, a base station, and an MME.

### [EMBODIMENTS OF THE INVENTION]

Hereinafter, embodiments of the present invention will be described with reference to the drawings. The embodiments described below are merely an example, and the embodiments to which the present invention is applied are not limited to the following embodiments.

In the embodiments of the present invention described below, terms such as "synchronization signal (SS)," "primary SS (PSS)," "secondary SS (SSS)," "physical broadcast channel (PBCH)," and "physical RACH (PRACH)" used in the existing LTE are used. However, these terms are used for convenience of description, and a signal, a function, and the like similar to these terms may be referred to by other names. The above terms in NR correspond to NR-SS, NR-PSS, NR-SSS, NR-PBCH, NR-PRACH, and the like. However, those signals used for NR are not necessarily specified as "NR-".

In the embodiments of the present invention, a duplex mode may be a time division duplex (TDD) mode, may be a frequency division duplex (FDD) mode, or may be other modes (such as flexible duplex).

In the embodiments of the present invention, to "configure" radio parameters or the like may indicate to "pre-configure" a predetermined parameter, or to configure a parameter notified from a terminal 10 or a base station 20.

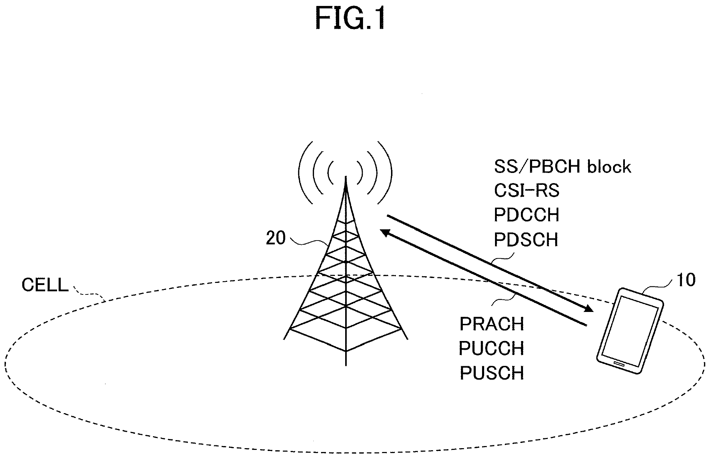

FIG. 1 is a diagram illustrating a radio communication system according to an embodiment of the present invention. The radio communication system according to an embodiment of the present invention includes a terminal 10 and a base station 20, as illustrated in FIG. 1. In FIG. 1, the radio communication system that includes one terminal 10 and one base station 20 is illustrated, but the radio communication system illustrated in FIG. 1 is only an example, and the radio communication system may include a plurality of terminals 10 and a plurality of base stations 20.

The base station 20 is a communication device that provides one or more cells and wirelessly communicates with the terminal 10. Physical resources of radio signals are defined in the time domain and the frequency domain, the time domain may be defined by OFDM symbols, and the frequency domain may be defined by sub-carriers or resource blocks. The base station 20 transmits synchronization signals and system information to the terminal 10. The synchronization signals are, for example, a NR-PSS and a NR-SSS. The system information is transmitted via, for example, a NR-PBCH. The system information may be referred to as broadcast information. The synchronization signals and broadcast information may be periodically transmitted as an SS block (SS/PBCH block) composed of a predetermined number of OFDM symbols. For example, the base station 20 transmits a DL (Downlink) control signal or data to the terminal 10 and receives a UL (Uplink) control signal or data from the terminal 10. The base station 20 and the terminal 10 can each transmit/receive a signal by performing beamforming. For example, as illustrated in FIG. 1, reference signals transmitted from the base station 20 include a CSI-RS (Channel State Information Reference Signal) and channels transmitted from the base station 20 include a PDCCH (Physical Downlink Control Channel) and a PDSCH (Physical Downlink Shared Channel).

The terminal 10 is a communication apparatus equipped with a wireless communication function such as a smartphone, a tablet, a wearable device, and a communication module for M2M (Machine-to-Machine). The terminal 10 may be referred to as a User Equipment (UE) 10. The terminal 10 receives a DL control signal or data from the base station 20 and transmits an UL control signal or data to the base station 20, and utilizes various communication services provided by a radio communication system. For example, as illustrated in FIG. 1, channels transmitted from the terminal 10 include PUCCH (Physical Uplink Control Channel) and PUSCH (Physical Uplink Shared Channel).

### (Multi-Radio Dual Connectivity)

Multi-Radio Dual Connectivity (MR-DC) is a generalization of the Intra-E-UTRA Dual Connectivity (DC) and the terminal 10 can utilize two different nodes connected via a backhaul, one providing New Radio (NR) access and the other providing E-UTRA or NR access. One node is a Master Node (MN) and the other is a Secondary Node (SN). Of the MN and SN, at least the MN is connected to the core network.

### (EN-DC)

In the E-UTRA-NR Dual Connectivity (EN-DC), the terminal 10 is connected to the base station 20 (the eNB 20) of one LTE that is an MN, and is also connected to the base station 30 (en-gNB 30) of the NR that is an SN. Hereinafter, the en-the gNB 30 (the gNB 30) is a node that provides the terminations of the NR user plane and control plane protocols to the terminal 10, and functions as an EN-DC secondary node. The eNB 20 is connected to the Evolved Packet Core (EPC) via an S1 interface. The eNB 20 is also connected to the gNB 30 via an X2 interface. The gNB 30 is connected to the EPC via the S1-U interface and to the other en-the gNB 30 via the X2-U interface.

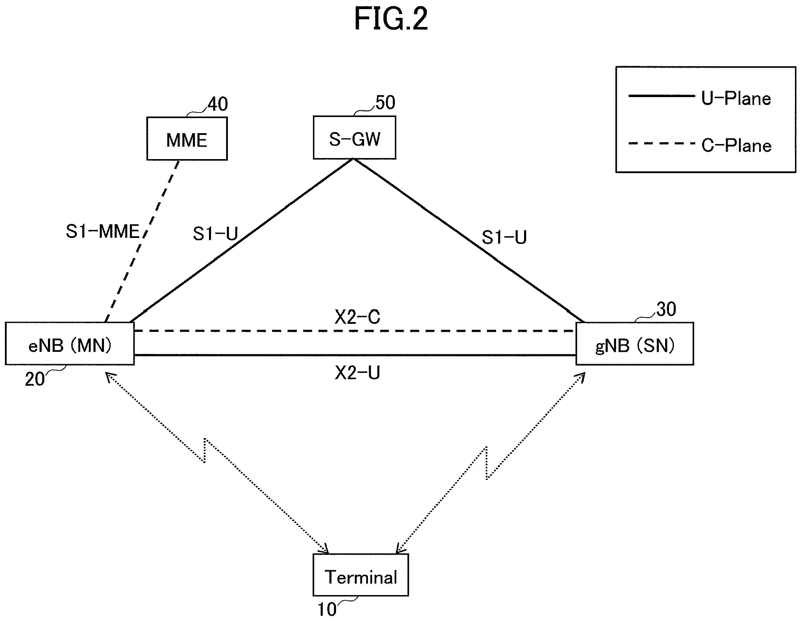

FIG. 2 illustrates an example of an EN-DC architecture. As illustrated in FIG. 2, in the case of EN-DC, in the control plane, a Mobility Management Entity (MME) 40 is a core network entity. The S1-MME interface is terminated with the eNB 20 acting as an MN. The MN the eNB 20 and the SN gNB30 are interconnected via an Xn-C interface.

As illustrated in FIG. 2, in the case of EN-DC, in the user plane, the MN the eNB 20 and the SN gNB30 are interconnected via the X2-U interface. The eNB 20 and the gNB 30 are connected to the Serving Gateway (S-GW) 50 via an S1-U interface.

### (Secondary Node Addition procedure)

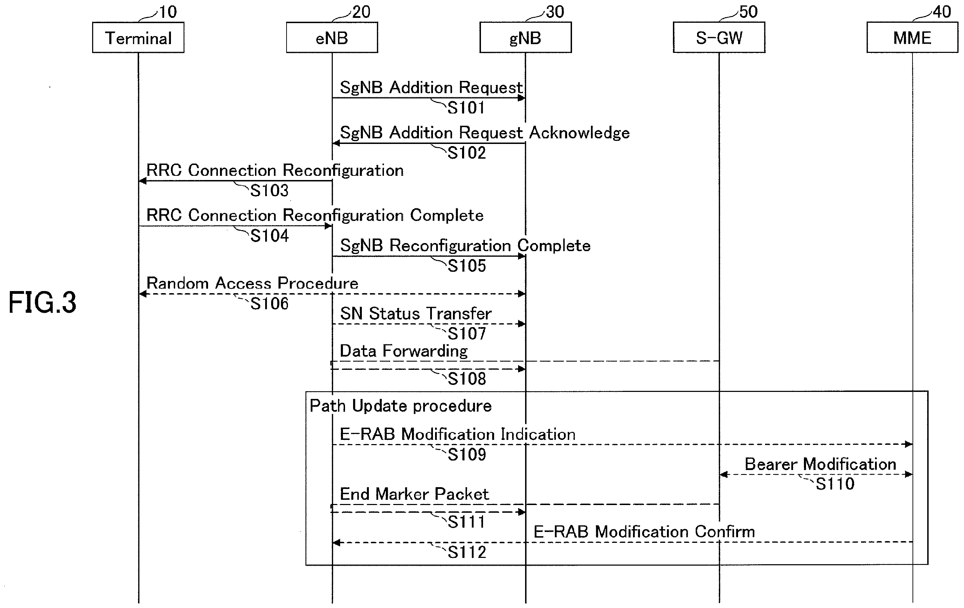

FIG. 3 is a diagram illustrating an example of a Secondary Node Addition procedure in an EN-DC. The Secondary Node Addition procedure is initiated by the eNB 20, as the MN, to provide resources from the SN (the gNB 30) to the terminal 10.

As illustrated in FIG. 3, in step S101, the eNB 20 requests the gNB 30 to allocate resources of E-UTR_AN Radio Access Bearer (E-RAB).

In step S102, the gNB 30 transmits to the eNB 20 an Acknowledgement for the E-RAB resource allocation request.

In step S103, the eNB 20 transmits the RRCConnectionReconfiguration message to the terminal 10.

In step S104, the terminal 10 applies a new configuration and transmits the RRCConnectionReconfigurationComplete message to the eNB 20.

In step S105, the eNB 20 transmits an SgNB ReconfigurationComplete message to notify the gNB 30 that the reconfiguration procedure at the terminal 10 is completed.

In step S106, the terminal 10 performs a Random Access Procedure to establish synchronization with the gNB 30.

In step S107, the eNB 20 transmits SN Status Transfer to the gNB 30, and in step S108, the eNB 20 performs data forwarding for the gNB 30.

Thereafter, in step S109 through step S112, a route of the user plane to the EPC is updated for the bearer terminated at the gNB 30.

### (E-RAB Setup Procedure)

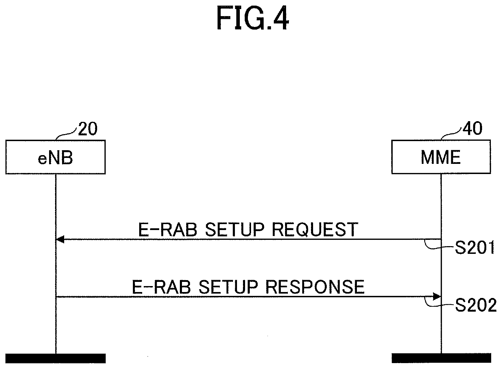

FIG. 4 is a diagram illustrating an example of an E-UTR_AN Radio Access Bearer (E-RAB) setup procedure. The purpose of the E-RAB setup procedure is to allocate resources for E-RAB to Uu and S1 interfaces and to set up a Data Radio Bearer corresponding to terminal 10.

In the example illustrated in FIG. 4, in step S201, the MME 40 transmits an E-RAB SETUP REQUEST to the eNB 20. In response to receiving an E-RAB SETUP REQUEST message, the eNB 20 performs the requested E-RAB setup if a resource is available for the requested setup. Thereafter, in step S202, the eNB 20 transmits an E-RAB SETUP RESPONSE message to the MME 40.

### (Problems)

Herein, in the procedure using the eNB 20 acting as the MN in the EN-DC, for example, the Secondary Node Addition procedure, the following race condition may be assumed. In the EN-DC Secondary Node Addition procedure, it is assumed that the MN the eNB 20 is performing the E-RAB modification procedure. It is considered that the MME 40 concurrently initiates an E-RAB setup procedure for a voice call, for example. Thus, it is unclear how the MME 40 and the eNB 20 resolve the contention between the E-RAB modification procedure performed by the eNB 20 and the E-RAB setup procedure performed by the MME 40. Accordingly, there is a need to define how to resolve contention between the E-RAB modification procedure performed by the eNB 20 and the E-RAB setup procedure performed by the MME 40.

### (Option 1-1)

As one way to resolve the contention between the EN-DC related procedure performed by the eNB 20 and the E-RAB setup procedure performed by the MME 40, the following method has been proposed. For example, when the eNB 20 performs an EN-DC related procedure that contends with the E-RAB setup procedure performed by the MME 40, the eNB 20 is configured to reject the E-RAB setup request made by the MME 40. When the eNB 20 rejects the E-RAB setup request, the eNB 20 may indicate to the MME 40 "incompatible procedure is ongoing" as Cause.

However, the above-described solution is one of a plurality of solutions. In order to design a system more flexibly in consideration of service quality and operator policy, more solutions need to be considered, and the best solution needs to be selected, from among the considered solutions, according to the circumstances. Solutions other than the those described above will be described below.

In considering solutions to the above-described contention, a list of possible solutions can be obtained based on two axes: (1) which of the eNB 20 request and the MME 40 request should be prioritized; and (2) which of the eNB 20 and MME 40 nodes should be prioritized.

In the case of data communication, a better service may be provided to users by prioritizing the setting of EN-DC, in view of (1) above, that is, which of the eNB20 request and the MME 40 request should be prioritized. However, in the case of voice communication, delaying the process based on the MME 40 request by lowering the priority of the MME 40 request may degrade the quality of service to users. Thus, whether the eNB 20 request or the MME 40 request should be prioritized may be determined by the operator's policy.

In terms of (2) above, that is, which of the node the eNB 20 and node MME 40 should be prioritized, one of the nodes the eNB 20 and MME 40 may be prioritized to avoid the contention between priority determined by the eNB 20 and priority determined by the MME 40.

Note that the MME 40 may not detect a race condition until the MME 40 receives an E-RAB Modification Indication (i.e., immediately before the completion of EN-DC). That is, the eNB 20 may detect the race condition at an earlier stage. Thus, the determination made by the eNB 20 may be prioritized for example.

Specifically, the following four options are considered.

### (Option 1-1)

Between the eNB 20 request and the MME 40 request of (1), the eNB20 request is prioritized, and between the eNB 20 and the MME 40 of (2), the eNB20 is prioritized. That is, in Option 1-1, the eNB20 prioritizes the eNB20 request.

### (Option 1-2)

Between the eNB 20 request and the MME 40 request of (1), the eNB20 request is prioritized, and between the eNB 20 and MME 40 of (2), the MME 40 is prioritized. That is, in Option 1-2, the MME 40 prioritizes the eNB 20 request.

### (Option 2-1)

Between the eNB 20 request and the MME 40 request of (1), the MME 40 request is prioritized, and between the eNB 20 and the MME 40 of (2), the eNB20 is prioritized. That is, in Option 2-1, the eNB 20 prioritizes the MME 40 request.

### (Option 2-2)

Between the eNB 20 request and the MME 40 request of (1), the MME 40 request is prioritized, and between the eNB 20 and the MME 40 of (2), the MME 40 is prioritized. That is, in Option 2-2, the MME 40 prioritizes the MME 40 request.

The specific details of these options are described below.

### (Option 1-1)

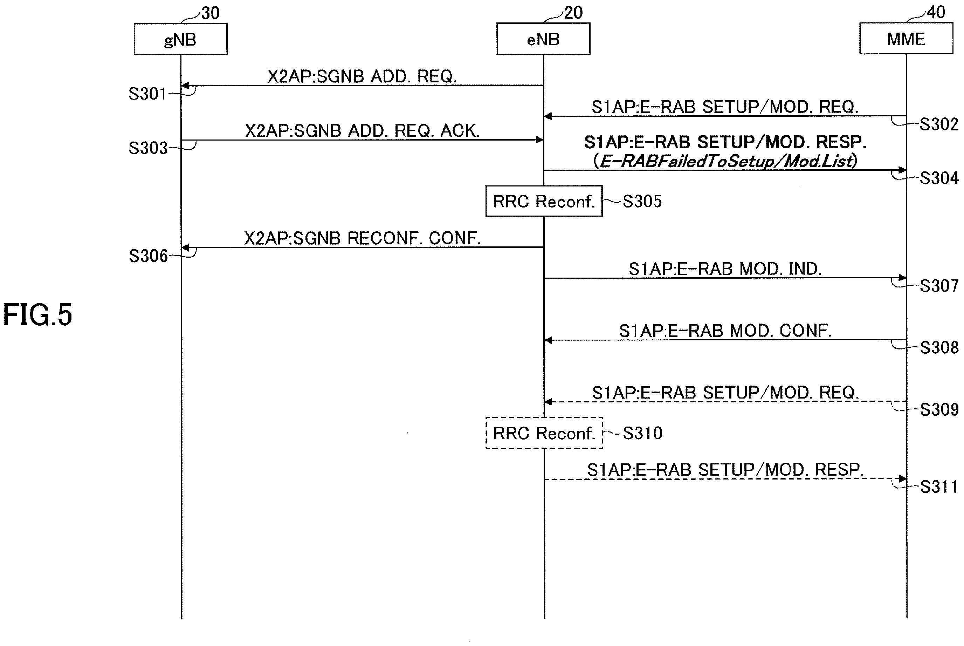

In Option 1-1, between the eNB 20 request and MME 40 request, the eNB 20 prioritizes the eNB 20 request. FIG. 5 is a diagram illustrating an example of the process of Option 1-1. In step S301, the eNB 20 transmits a secondary cell addition request to the gNB 30. In step S302, the MME 40 requests the eNB 20 to configure/modify the E-RAB. In step S303, the gNB 30 transmits an Acknowledgement (ACK) to the eNB 20 for the secondary cell addition request. Herein, in Option 1-1, in order to prioritize the eNB 20 request while the node that performs the priority determination is the eNB 20, in step S304, the eNB 20 transmits information indicating that the E-RAB setup/modification request transmitted from the MME 40 in step S302 has been rejected. In step S305, the RRC reconfiguration process (Radio Resource Control (RRC) Reconfiguration) is performed in the eNB 20 to add a secondary cell corresponding to the secondary cell addition request in step S301.

Thereafter, the eNB 20 transmits, to the gNB 30, a notification of the completion of the RRC reconfiguration process in step S306. In step S307, the eNB 20 transmits an E-RAB MODIFICATION INDICATION message to MME 40 to notify that the E-RAB has been modified. In step S308, the MME 40 transmits an E-RAB MODIFICATION CONFIRM message to the eNB 20.

Thereafter, in step S309, the MME 40 again requests the eNB 20 to configure/modify the rejected E-RAB. In this case, because the eNB 20 does not perform the EN-DC process that contends with the E-RAB setup/modification request from the MME 40, in step S310, the eNB 20 performs the RRC reconfiguration process for configuring/modifying the E-RAB in response to the E-RAB setup/modification request from the MME 40. The eNB 20 then transmits an E-RAB MODIFY RESPONSE message to the MME 40 in step S311.

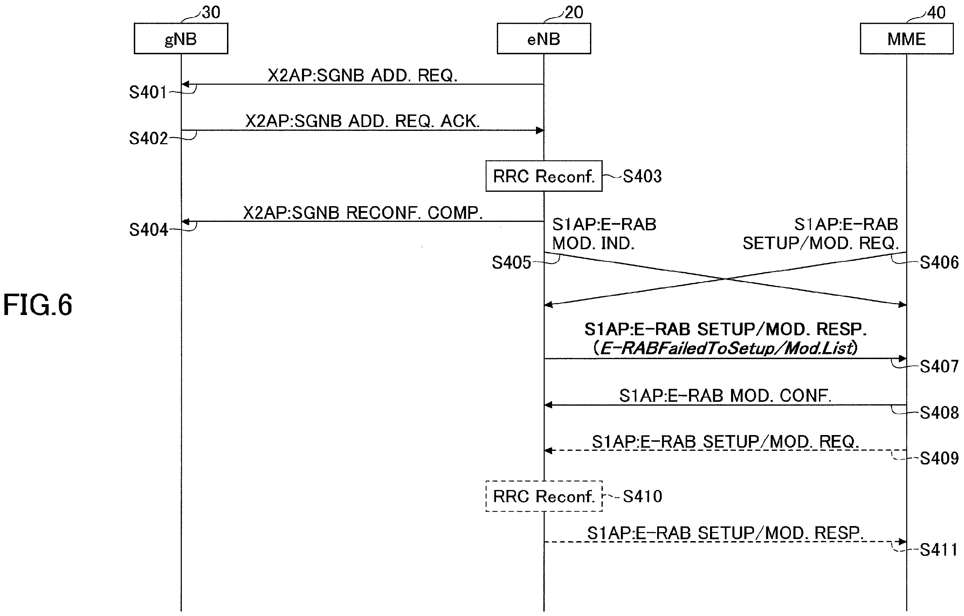

FIG. 6 is a diagram illustrating another example of a process of Option 1-1. In step S401, the eNB 20 makes a secondary cell addition request to the gNB 30. In step S402, the gNB 30 transmits an ACK to the eNB 20 for the secondary cell addition request. In step S403, the RRC reconfiguration process is performed in the eNB 20 to add a secondary cell corresponding to the secondary cell addition request in step S401.

Thereafter, the eNB 20 transmits, to the gNB 30, a notification of the completion of the RRC reconfiguration process in step S404. In step S405, the eNB 20 transmits an E-RAB MODIFICATION INDICATION message to MME 40 to notify that the E-RAB has been modified. In this case, before receiving the E-RAB MODIFICATION INDICATION message transmitted from the eNB 20 in step S405, the MME 40 requests the eNB 20 to configure/modify the E-RAB in step S406. The eNB 20 receives an E-RAB setup/modification request transmitted from the MME 40 in step S406 before receiving an E-RAB MODIFICATION CONFIRM message from the MME 40. Here, in Option 1-1, the node that performs the priority determination is the eNB 20, and in order to prioritize the eNB 20 request, in step S407, the eNB 20 transmits information indicating that the E-RAB setup/modification request transmitted from MME 40 in step S406 has been rejected. In step S408, the MME 40 transmits an E-RAB MODIFICATION CONFIRM message to the eNB 20.

Thereafter, in step S409, the MME 40 again requests the eNB 20 to configure/modify the rejected E-RAB. In this case, because there is no process of the EN-DC that contends with the E-RAB setup/modification request from the MME 40 in the eNB 20, in step S410, the eNB 20 performs the reconfiguring process of the RRC to configure/modify the E-RAB in response to the E-RAB setup/modification request from the MME 40. The eNB 20 then transmits an E-RAB MODIFY RESPONSE message to the MME 40 in step S411.

The Option 1-1 method can resolve the contention between the EN-DC relating procedure by the eNB 20 and the E-RAB setup procedure by the MME 40. In addition, Option 1-1 method is similar to the method specified in the specification in which the eNB 20 interrupts the setting of E-RAB and prioritizes a handover process when handover is necessary when setting E-RAB. Therefore, the implementation burden is considered to be reduced.

### (Option 1-2)

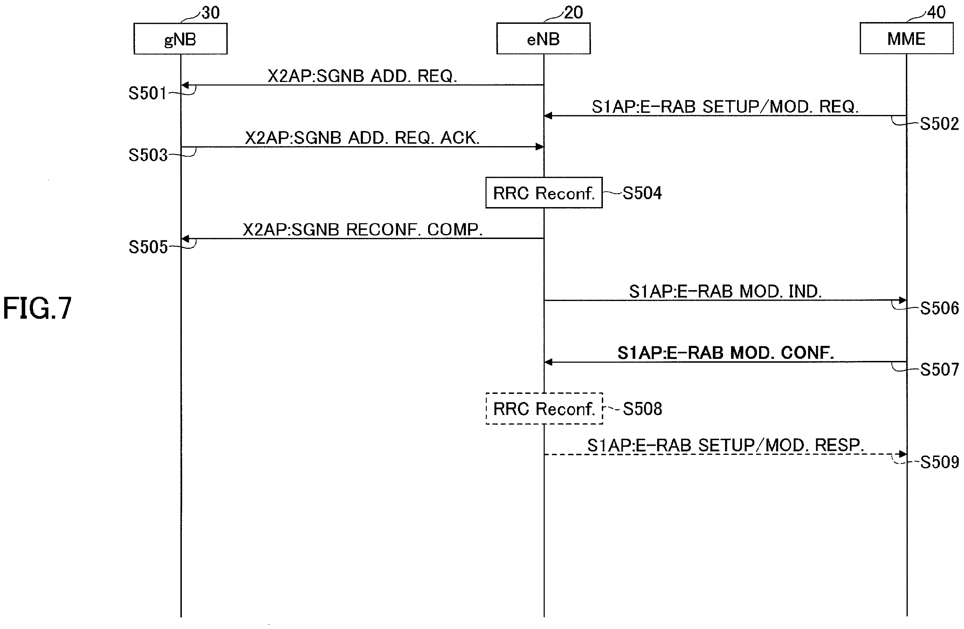

In options 1-2, between the eNB 20 request and the MME 40 request, the MME 40 prioritizes the eNB 20 request. FIG. 7 is a diagram illustrating an example of a process of Option 1-2. In step S501, the eNB 20 makes a secondary cell addition request to the gNB 30. In step S502, the MME 40 requests the eNB 20 to configure/modify the E-RAB. In step S503, the gNB 30 transmits an ACK to the eNB 20 for the secondary cell addition request. In step S504, the RRC reconfiguration process is performed in the eNB 20 to add a secondary cell corresponding to the secondary cell addition request in step S501.

Thereafter, the eNB 20 transmits, to the gNB 30, a notification of the completion of the RRC reconfiguration process in step S505. In step S506, the eNB 20 transmits an E-RAB MODIFICATION INDICATION message to MME 40 to notify that the E-RAB has been modified. In step S507, the MME 40 transmits an E-RAB MODIFICATION CONFIRM message to the eNB 20 because the MME 40 prioritizes the eNB 20 request, between the eNB 20 request and the MME 40 request. That is, between the secondary cell addition request by the eNB 20 in step S501 and the E-RAB setup/modification request by the MME 40 in step S502, the secondary cell addition request by the eNB 20 in step S501 is prioritized, and the corresponding process is completed first.

Thereafter, in step S508, the eNB 20 performs the RRC reconfiguration process in the eNB 20 in order to configure/modify the E-RAB corresponding to the E-RAB setup/modification request received from the MME 40 in step S502. The eNB 20 then transmits an E-RAB MODIFY RESPONSE message to the MME 40 in step S509.

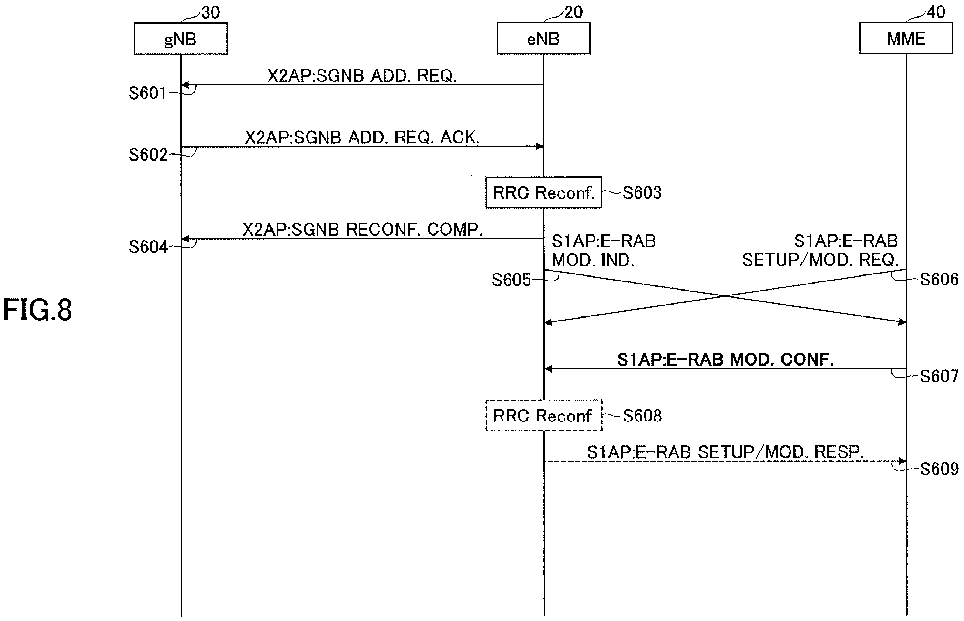

FIG. 8 is a diagram illustrating another example of a process of Option 1-2. In step S601, the eNB 20 makes a secondary cell addition request to the gNB 30. In step S602, the gNB 30 transmits an ACK to the eNB 20 for the secondary cell addition request. In step S603, the RRC reconfiguration process is performed in the eNB 20 in order to add a secondary cell corresponding to the secondary cell addition request in step S601.

Thereafter, the eNB 20 transmits, to the gNB 30, a notification of the completion of the RRC reconfiguration process in step S604. In step S605, the eNB 20 transmits an E-RAB MODIFICATION INDICATION message to MME 40 to notify that the E-RAB has been modified. In this case, before receiving the E-RAB MODIFICATION INDICATION message transmitted from the eNB 20 in step S605, the MME 40 requests the eNB 20 to configure/modify the E-RAB in step S606. In Option 1-2, the MME 40 is prioritized over the eNB 20 requests between the eNB 20 request and the MME 40 request. Accordingly, in response to receiving an E-RAB MODIFICATION INDICATION message transmitted from the eNB 20 in step S605, the MME 40 transmits an E-RAB MODIFICATION CONFIRM message to the eNB 20 in step S607. That is, of the secondary cell addition request by the eNB 20 in step S601 and the E-RAB setup/modification request by the MME 40 in step S606, the secondary cell addition request by the eNB 20 in step S601 is prioritized, and the corresponding process is completed first.

Thereafter, in step S608, the eNB 20 performs the RRC reconfiguration process in the eNB 20 in order to perform the E-RAB setup/modification corresponding to the E-RAB setup/modification request transmitted from the MME 40 in step S606. The eNB 20 then transmits an E-RAB MODIFY RESPONSE message to the MME 40 in step S609.

The Option 1-2 method can resolve the contention between the EN-DC relating procedure by the eNB 20 and the E-RAB setup procedure by the MME 40. The MME 40 also performs the process according to the eNB 20 request, and, thus, a time spent for resolving the contention can be reduced.

### (Option 2-1)

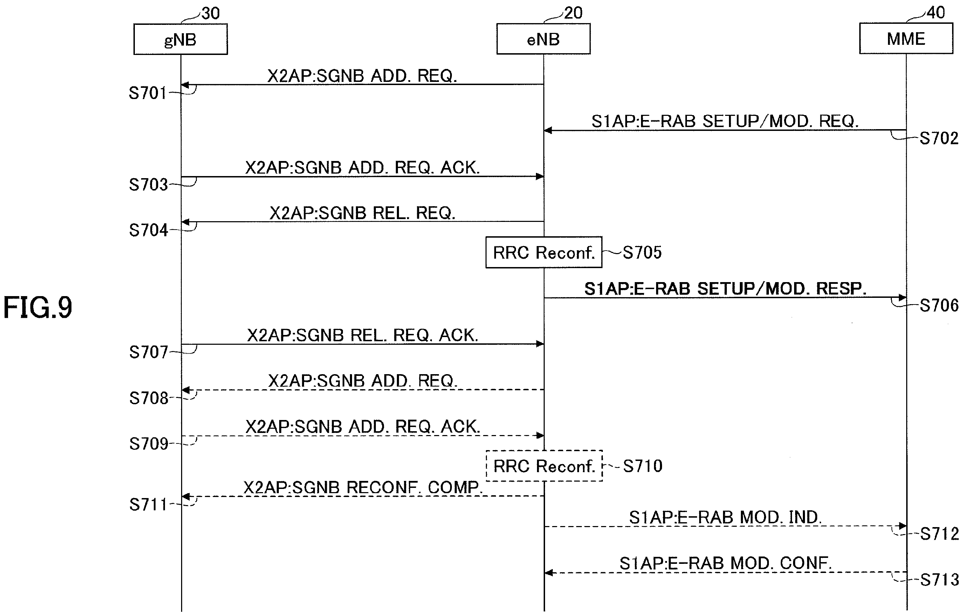

In Option 2-1, the eNB 20 prioritizes, between the eNB 20 request and the MME 40 request, the MME 40 request. FIG. 9 is a diagram illustrating an example of a process of Option 2-1. In step S701, the eNB 20 makes a secondary cell addition request to the gNB 30. In step S702, the MME 40 requests the eNB 20 to configure/change the E-RAB. In step S703, the gNB 30 transmits an ACK to the eNB 20 for the secondary cell addition request. Herein, in Option 2-1, the node that determines the priority is the eNB 20, and the MME 40 request is prioritized. Accordingly, in step S704, the eNB 20 transmits an SgNB Release Required message to the gNB 30 to execute the Secondary Node Release procedure. In step S705, in order to configure/modify the E-RAB corresponding to the E-RAB setup/modification request from the MME 40, the eNB 20 performs the RRC reconfiguration process. Thereafter, in step S706, the eNB 20 transmits an E-RAB MODIFY RESPONSE message to MME 40. In step S707, the eNB 20 receives an ACK for the SgNB Release Required message from the gNB 30.

Then, in step S708, the eNB 20 again makes a secondary cell addition request to the gNB 30. In step S709, the gNB 30 transmits an ACK to the eNB 20 for the secondary cell addition request. In step S710, the RRC reconfiguration process is performed in the eNB 20 to add a secondary cell corresponding to the secondary cell addition request in step S708.

Thereafter, the eNB 20 transmits, to the gNB 30, a notification of the completion of the RRC reconfiguration process in step S711. In step S712, the eNB 20 transmits an E-RAB MODIFICATION INDICATION message to MME 40 to notify that the E-RAB has been modified. In step S713, the MME 40 transmits an E-RAB MODIFICATION CONFIRM message to the eNB 20.

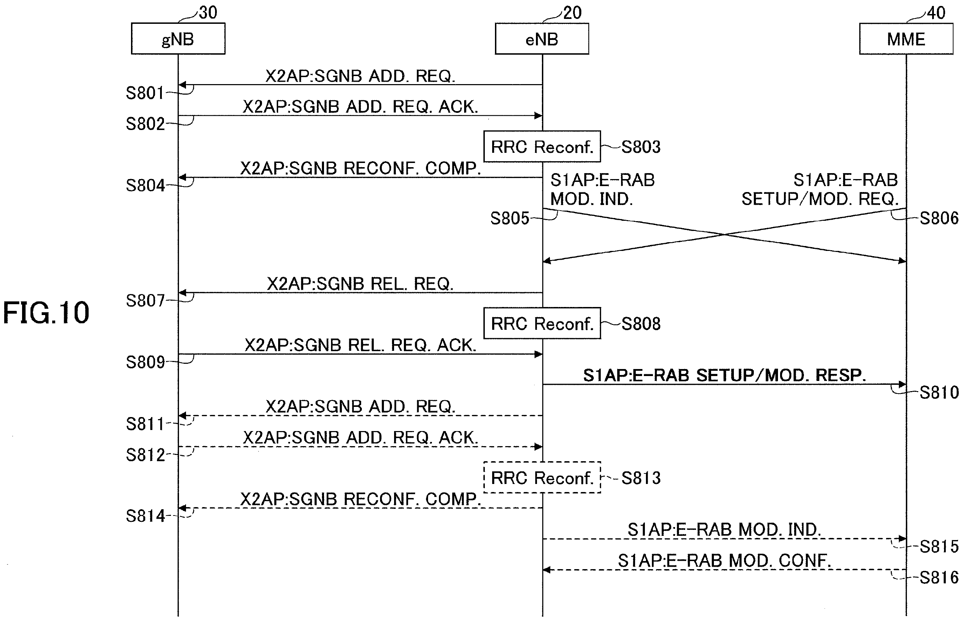

FIG. 10 is a diagram illustrating another example of a process of Option 2-1. In step S801, the eNB 20 makes a secondary cell addition request to the gNB 30. In step S802, the gNB 30 transmits an ACK to the eNB 20 for the secondary cell addition request. In step S803, the RRC reconfiguration process is performed in the eNB 20 to add a secondary cell corresponding to the secondary cell addition request in step S801.

Thereafter, the eNB 20 transmits, to the gNB 30, a notification of the completion of the RRC reconfiguration process in step S804. In step S805, the eNB 20 transmits an E-RAB MODIFICATION INDICATION message to MME 40 to notify that the E-RAB has been modified. In this case, before receiving the E-RAB MODIFICATION INDICATION message transmitted from the eNB 20 in step S805, the MME 40 makes an E-RAB setup/modification request to the eNB 20 in step S806. The eNB 20 receives the E-RAB setup/modification request sent from the MME 40 in step S806 before receiving an E-RAB MODIFICATION CONFIRM message from the MME 40. Here, in Option 2-1, the node that performs the priority determination is the eNB 20, and in step S807, the eNB 20 transmits an SgNB Release Required message to gNB30 to execute the Secondary Node Release Procedure in order to prioritize the MME 40 request. In step S808, in order to configure/modify the E-RAB corresponding to the E-RAB setup/modification request from the MME 40, the eNB 20 performs the RRC reconfiguration process. Then, in step S809, the eNB 20 receives an ACK from the gNB 30 for the SgNB Release Required message. Thereafter, in step S810, the eNB 20 transmits an E-RAB MODIFY RESPONSE message to MME 40.

Then, in step S811, the eNB 20 again makes a secondary cell addition request to the gNB 30. In step S812, the gNB 30 transmits an ACK to the eNB 20 for the secondary cell addition request. In step S813, the RRC reconfiguration process is performed in the eNB 20 to add a secondary cell corresponding to the secondary cell addition request in step S811.

Thereafter, the eNB 20 transmits, to the gNB 30, a notification of the completion of the RRC reconfiguration process in step S814. In step S815, the eNB 20 transmits an E-RAB MODIFICATION INDICATION message to MME 40 to notify that the E-RAB has been modified. In step S816, the MME 40 transmits an E-RAB MODIFICATION CONFIRM message to the eNB 20.

The Option 2-1 method can resolve the contention between the EN-DC relating procedure by the eNB 20 and the E-RAB setup procedure by the MME 40.

### (Option 2-2)

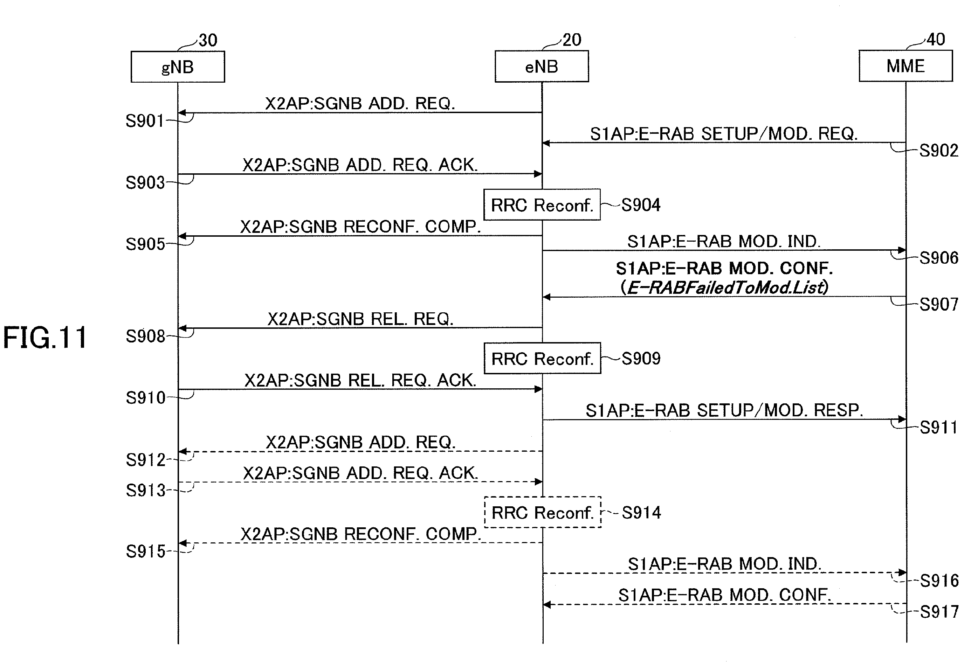

In Option 2-2, between the eNB 20 request and the MME 40 request, the MME 40 prioritizes the MME 40 request. FIG. 11 is a diagram illustrating an example of a process of Option 2-2. In step S901, the eNB 20 makes a secondary cell addition request to the gNB 30. In step S902, the MME 40 makes an E-RAB setup/modification request to the eNB 20. In step S903, the gNB 30 transmits an ACK to the eNB 20 for the secondary cell addition request. In step S904, the RRC reconfiguration process is performed in the eNB 20 to add a secondary cell corresponding to the secondary cell addition request in step S901.

Then, the eNB 20 transmits, to the gNB 30, a notification of the completion of the RRC reconfiguration process in step S905. In step S906, the eNB 20 transmits an E-RAB MODIFICATION INDICATION message to MME 40 to notify that the E-RAB has been modified. Here, the MME 40 prioritizes the MME 40 request, between the eNB 20 request and the MME 40 request, so in step S907, the MME 40 transmits an E-RAB MODIFICATION CONFIRM message to the eNB 20 by including a list of one or more E-RABs that failed to be configured/modified in the E-RAB Failed to Modify List information element. That is, of the secondary cell addition request by the eNB 20 in step S901 and the E-RAB setup/modification request by the MME 40 in step S902, the E-RAB setup/modification request by the MME 40 in step S902 is prioritized.

Then, in step S908, the eNB 20 transmits an SgNB 30 Release Required message to the gNB 30 to perform a Secondary Node Release procedure. In step S909, in order to configure/modify the E-RAB corresponding to the E-RAB setup/modification request from the MME 40, the eNB 20 performs the RRC reconfiguration process. In step S910, the eNB 20 receives an ACK for the SgNB Release Required message from the gNB 30. Thereafter, in step S911, the eNB 20 transmits an E-RAB MODIFY RESPONSE message to MME 40.

Then, in step S912, the eNB 20 again makes a secondary cell addition request to the gNB 30. In step S913, the gNB 30 transmits an ACK to the eNB 20 in response to the secondary cell addition request. In step S914, the RRC reconfiguration process is performed in the eNB 20 to add a secondary cell corresponding to the secondary cell addition request in step S912.

Thereafter, the eNB 20 transmits, to the gNB 30, a notification of the completion of the RRC reconfiguration process in step S915. In step S916, the eNB 20 transmits an E-RAB MODIFICATION INDICATION message to MME 40 to notify that the E-RAB has been modified. In step S917, the MME 40 transmits an E-RAB MODIFICATION CONFIRM message to the eNB 20.

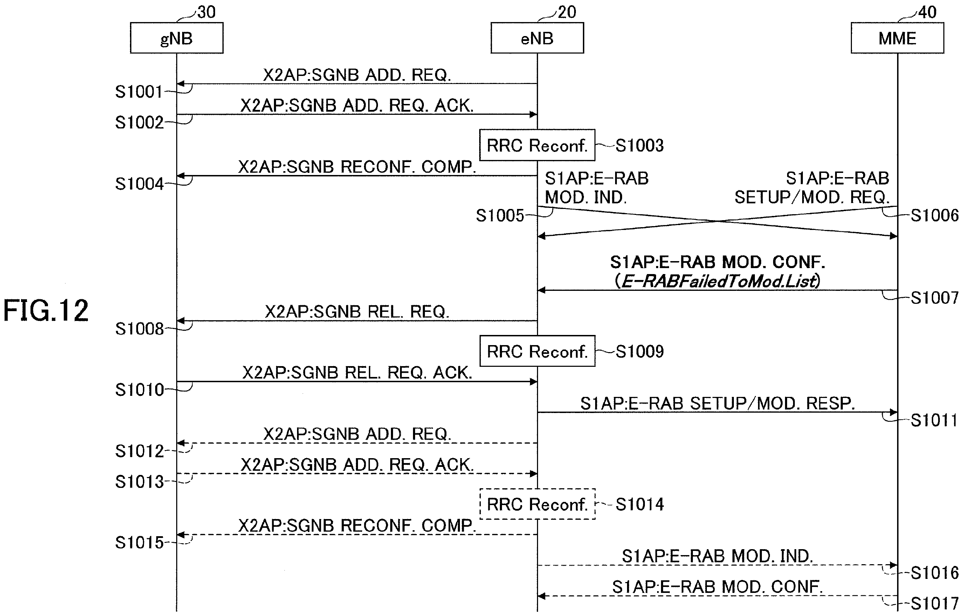

FIG. 12 is a diagram illustrating another example of a process of Option 2-2. In step S1001, the eNB 20 makes a secondary cell addition request to the gNB 30. In step S1002, the gNB 30 transmits an ACK to the eNB 20 for the secondary cell addition request. In step S1003, in order to add a secondary cell corresponding to the secondary cell addition request in step S1001, the RRC reconfiguration process is performed in the eNB 20.

Thereafter, the eNB 20 transmits, to the gNB 30, a notification of the completion of the RRC reconfiguration process in step S1004. In step S1005, the eNB 20 transmits an E-RAB MODIFICATION INDICATION message to MME 40 to notify that the E-RAB has been modified. In this case, before receiving the E-RAB MODIFICATION INDICATION message transmitted from the eNB 20 in step S1005, the MME 40 makes an E-RAB setup/modification request to the eNB 20 in step S1006. In Option 2-2, the MME 40 prioritizes the MME 40 request, between the eNB 20 request and the MME 40 request. Accordingly, in response to receiving the E-RAB MODIFICATION INDICATION message transmitted from the eNB 20 in step S1005, the MME 40 transmits to the eNB 20 an E-RAB MODIFICATION CONFIRM message by including a list of one or more E-RABs that failed to configured/modified in the E-RAB Failed to Modify List information element in step S1007. That is, between the secondary cell addition request by the eNB 20 in step S1001 and the E-RAB setup/modification request by the MME 40 in step S1006, the E-RAB setup/modification request by the MME 40 in step S1006 is prioritized.

Thereafter, in step S1008, the eNB 20 transmits an SgNB 30 Release Required message to the gNB 30 to execute the Secondary Node Release Procedure. In step S1009, in order to configure/modify the E-RAB corresponding to the E-RAB setup/modification request from the MME 40, the eNB 20 performs the RRC reconfiguration process. In step S1010, the eNB 20 receives an ACK from the gNB 30 for the SgNB 30 Release Required message. Thereafter, in step S1011, the eNB 20 transmits an E-RAB MODIFY RESPONSE message to MME 40.

Then, in step S1012, the eNB 20 again makes a secondary cell addition request to the gNB 30. In step S1013, the gNB 30 transmits an ACK to the eNB 20 for the secondary cell addition request. In step S1014, the RRC reconfiguration process is performed in the eNB 20 in order to add a secondary cell corresponding to the secondary cell addition request in step S1012.

Thereafter, the eNB 20 transmits, to the gNB 30, a notification of the completion of the RRC reconfiguration process in step S1015. In step S1016, the eNB 20 transmits an E-RAB MODIFICATION INDICATION message to MME 40 to notify that the E-RAB has been modified. In step S1017, the MME 40 transmits an E-RAB MODIFICATION CONFIRM message to the eNB 20.

The method of Option 2-2 can resolve the contention between the EN-DC relating procedure by the eNB 20 and the E-RAB setup procedure by the MME 40.

The methods of Option 1-1 through 2-2 described above may be used individually or in various combinations with each other.

### (Supplementary Explanation of Option 1-1)

An example of the operation of the eNB 20 when the method of Option 1-1 is executed will be described below. For example, when E-RAB setup/modification is performed during process that contends with E-RAB setup/modification process such as EN-DC process, the eNB 20 may reject, after indicating "Interaction with other procedure" as a Cause Value, the E-RAB setup request process, and continue the contention process.

### (Supplementary Explanation of Option 1-2)

An example of an operation of the MME 40 when the method of Option 1-2 is executed will be described below. For example, when the E-RAB Modification Indication Procedure is activated upon the E-RAB being configured or the E-RAB being modified, the MME 40 may execute the E-RAB Modification Indication Procedure prior to configuring the E-RAB or modifying the E-RAB.

### (Supplementary Explanation of Option 2-1)

An example of an operation of the MME 40 when the method of Option 2-1 is performed will be described below. For example, when an E-RAB setup/modification is performed during a process that contends with an E-RAB setup/modification process, such as an EN-DC process, the eNB 20 may stop the contention process and continue the E-RAB setup/modification procedure. When the eNB 20 receives an E-RAB setup/modification request message before receiving a response message (e.g., an E-RAB MODIFICATION CONFIRM message) for a contention process, the eNB 20 may determine that the execution of the contention process has failed. For example, when the MME 40 receives an E-RAB Modification Indication message upon the E-RAB being configured or the E-RAB being modified, the MME 40 may ignore the E-RAB Modification Indication message.

### (Supplementary Explanation of Option 2-2)

An example of an operation of the MME 40 when the method of Option 2-2 is executed will be described below. For example, when E-RAB Modification Indication Procedure is activated upon the E-RAB being configured or the E-RAB being modified, the MME 40 may continue, after indicating "Interaction with other procedure" as a Cause Value, to perform the E-RAB setup or E-RAB modification process without executing E-RAB Modification Indication Procedure.

### (Example When Option 1-1 Is Used in Combination with Option 2-1)

For example, when an E-RAB setup/modification is performed during a contention process such as an EN-DC process that contends with an E-RAB setup/modification process, the eNB 20 may continue, after indicating "Interaction with other procedure" as a Cause Value, to perform the contention process without performing the E-RAB setup/modification process, or to perform the E-RAB setup/modification process after determining that the contention process has been failed (when an E-RAB SETUP REQUEST message for the E-RAB setup is received prior to receiving the E-RAB MODIFICATION CONFIRM message for the contention process, the eNB 20 may continue to perform the E-RAB setup/modification process by determining the contention process to have failed). Here, the eNB 20 may determine, on the basis of predetermined information, whether to continue executing the contention process without executing the E-RAB setup/modification process, or to continue executing the E-RAB setup/modification process by determining that the contention process has failed. The predetermined information may be, for example, the type of request from MME 40 (e.g., the type of bearer to be configured), the type of call originating (e.g., voice/data identification by Access Attempt Type), the gNB 30 and/or MME 40 load information, operations, Administration and Maintenance (OAM) settings, the information indicating the priority between the EN-DC process, etc. and the E-RAB setup/modification process, and a combination of the above.

For example, when the MME 40 receives an E-RAB MODIFICATION INDICATION message and does not receive an E-RAB SETUP RESPONSE message or an E-RAB MODIFY RESPONSE message containing the corresponding E-RAB ID(s) in the E-RAB Failed to Setup List IE or the E-RAB Failed to Modify List IE, the MME 40 may ignore the E-RAB MODIFICATION INDICATION message.

### (Device Configuration)

Next, examples of functional configurations of the terminal 10, the base station 20 (eNB 20), and the MME 40, which perform the above-describe processes and operations, are described. The terminal 10, the base station 20, and the MME 40 include functions for implementing the above-described embodiments. However, each of the terminal 10, the base station 20, and the MME 40 may include only some of the functions described in the embodiments.

### <Terminal 10>

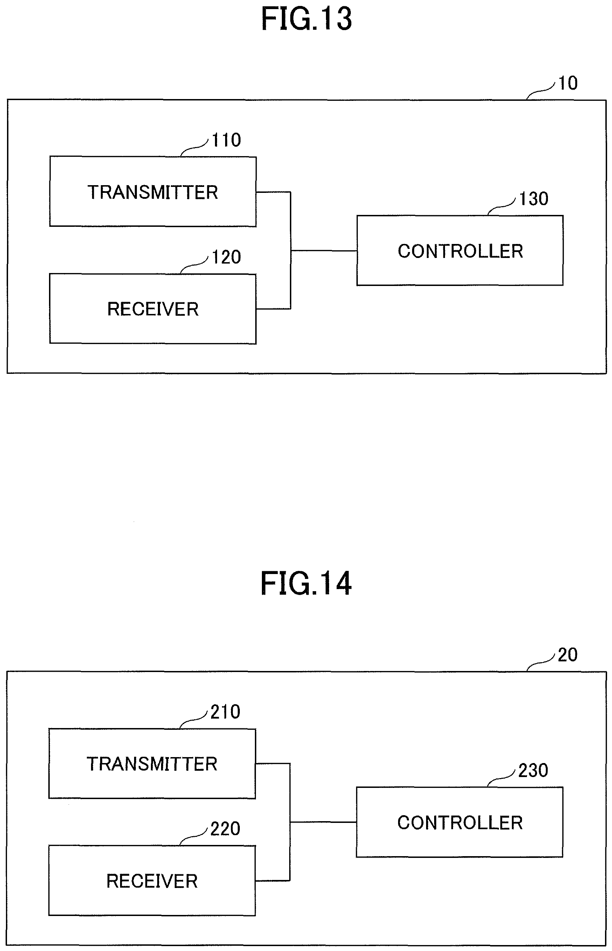

FIG. 13 is a diagram illustrating an example of a functional configuration of the terminal 10. As illustrated in FIG. 13, the terminal 10 includes a transmitter 110, a receiver 120, and a controller 130. The functional configuration illustrated in FIG. 13 is merely an example. As long as operations related to the embodiments of the present invention can be performed, the categorization and the names of the functional components may be freely changed.

The transmitter 110 includes a function for generating a transmission signal to the base station 20 side and transmitting the signal wirelessly. The receiver 120 includes a function for receiving various signals transmitted from the base station 20 and acquiring, for example, upper layer information from the received signals. The receiver 120 includes a measuring unit configured to measure a signal to be received and acquire a received power.

The controller 130 performs a control of the terminal 10. A function of the controller 130 relating to signal transmission may be included in the transmitter 110, and a function of the controller 130 relating to signal reception may be included in the receiver 120.

For example, in the terminal 10, the controller 130 performs settings for performing communication with the eNB 20 and the gNB 30 through the EN-DC. The receiver 120 receives signals transmitted from the eNB 20 and the gNB 30. The transmitter 110 transmits signals to the eNB 20 and the gNB 30.

### <Base Station 20>

FIG. 14 is a diagram illustrating an example of a functional configuration of the base station 20. As illustrated in FIG. 14, the base station 20 includes a transmitter 210, a receiver 220, and a controller 230. The functional configuration illustrated in FIG. 14 is merely an example. The function classifications and the names of the functional units may be any classifications and the names insofar as operations according to the present embodiment may be performed.

The transmitter 210 creates a transmission signal from the transmission data and wirelessly transmits the transmission signal. The transmitter 210 transmits a transmission signal to the gNB 30, for example, through the X2 interface. The transmitter 210 transmits a signal to the MME 40 via the S1-MME interface. The receiver 220 receives various signals wirelessly and acquires signals from higher layers from the received signal of the physical layer. The receiver 220 receives a signal from the gNB 30, for example, via the X2 interface. The receiver 220 receives signals from the MME 40 via the S1-MME interface.

The controller 230 controls the base station 20. The function of the controller 230 relating to transmission may be included in the transmitter 210, and the function of the controller 230 relating to reception may be included in the receiver 220.

In the base station 20, the controller 230 functions to set the EN-DC with the gNB 30.

In the base station 20, the controller 230 controls the execution of the secondary node addition procedure in the EN-DC. The controller 230 controls the modification of the E-RAB.

In the base station 20, the receiver 220 receives a signal from the MME 40 for requesting the E-RAB setup/modification, and the controller 230 controls the E-RAB setup/modification.

Also, in the base station 20, the controller 230 may configure prioritizing the base station 20 request, of the base station 20 request and the MME 40 request. In this case, when the controller 230 controls the addition of a secondary cell in the base station 20, and the receiver 220 receives a signal from the MME 40 to request the E-RAB setup/modification, the controller 230 may reject the E-RAB setup/modification request.

In the base station 20, the controller 230 may configure prioritizing the MME 40 request, of the base station 20 request and the MME 40 request. In this case, when the controller 230 controls the secondary cell addition in the base station 20, and the receiver 220 receives a signal from the MME 40 for the E-RAB setup/modification, the controller 230 may stop the control for the secondary cell addition and perform control on the E-RAB setup/modification.

### <MME 40>

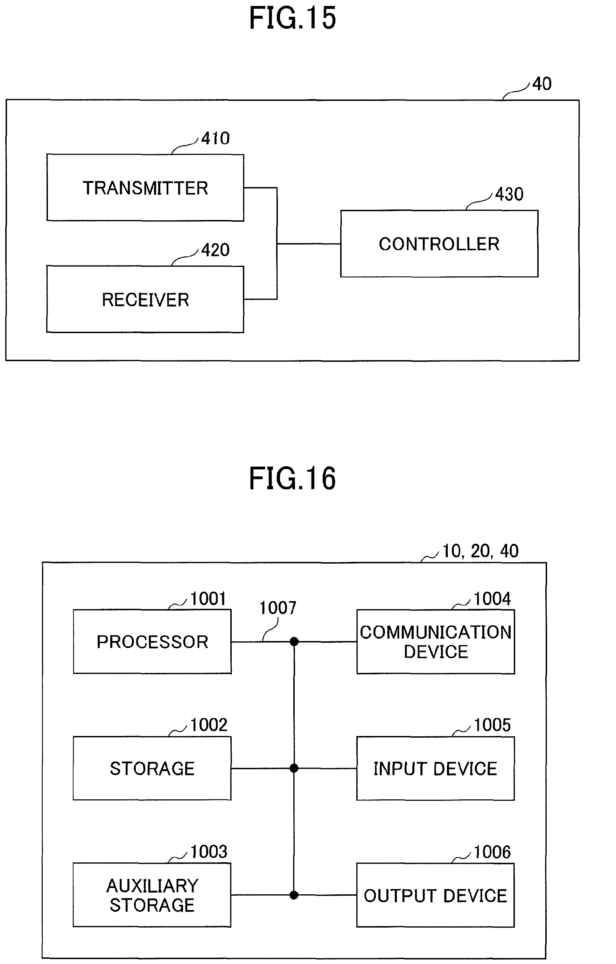

FIG. 15 is a diagram illustrating an example of a functional configuration of the MME 40. As illustrated in FIG. 15, the MME 40 includes a transmitter 410, a receiver 420, and a controller 430. The functional configuration illustrated in FIG. 15 is merely an example. The functional classifications and the names of the functional units may be any functional classifications and names insofar as operations according to the present embodiment can be performed.

The transmitter 410 generates a transmission signal from the transmission data and transmits the transmission signal to the base station 20 via the S1-MME interface. The receiver 420 receives signals from the base station 20 via the S1-MME interface.

The controller 430 controls the MME 40. The function of the controller 430 relating to transmission may be included in the transmitter 410, and the function of the controller 430 relating to reception may be included in the receiver 420.

In the MME 40, the controller 430 functions to perform the E-RAB setup/modification procedure with respect to the base station 20.

In the MME 40, the transmitter 410 transmits a signal for the E-RAB setup/modification request to the base station 20.

In the MME 40, the controller 430 may also configure to prioritize the base station 20 request over the MME 40 request, of the base station 20 request and the MME 40 request. In this case, when the controller 430 performs control for configuring/modifying the E-RAB in the MME 40, the controller 430 may prioritize control for modifying the setup of the EN-DC in the MME 40 when the receiver 420 receives a notification of modification of the E-RAB due to, for example, a modification of the setup of the EN-DC from the base station 20. For example, when the receiver 420 of the MME 40 receives an E-RAB MODIFICATION INDICATION message from the base station 20, the controller 430 may prioritize the request from the base station 20, and the transmitter 410 may transmit an E-RAB MODIFICATION CONFIRM message to the base station 20.

Also, in the MME 40, the controller 430 may set the MME 40 request to be prioritized over the base station 20 request and MME 40 request. In this case, when the controller 430 performs control for configuring/modifying the E-RAB in the MME 40, and the receiver 420 receives a notification of modification of the E-RAB due to, for example, a modification of the setup of the EN-DC from the base station 20, the controller 430 may stop control for modifying the setup of the EN-DC and preferentially perform process for configuring/modifying the E-RAB by the MME 40. For example, when the receiver 420 of the MME 40 receives an E-RAB MODIFICATION INDICATION message from the base station 20, the controller 430 may transmit to the base station 20 an E-RAB MODIFICATION CONFIRM message by including a list of one or more E-RABs that failed to configured/modified in the E-RAB Failed to Modify List information element.

### <Hardware Configuration>

The block diagrams (Figures 13 to 15) used in the descriptions of the above embodiments illustrate functional blocks. These functional blocks (components) are implemented by any combination of hardware and/or software. Also, each functional block may be implemented in any manner. That is, each functional block may be implemented by using one apparatus that is physically or logically integrated, or by using two or more apparatuses that are physically or logically separated from each other but are directly or indirectly connected to each other (e.g., via wired and/or wireless connections). Each functional block may also be implemented by combining the one apparatus or the two or more apparatuses with software. Examples of functions include, but are not limited to, determining, deciding, judging, calculating, computing, processing, deriving, investigating, searching, confirming, receiving, transmitting, outputting, accessing, solving, selecting, adopting, establishing, comparing, assuming, expecting, presuming, broadcasting, notifying, communicating, forwarding, configuring, reconfiguring, allocating, mapping, and assigning. For example, a functional block (or functional component) for transmitting may be referred to as a transmitting unit or a transmitter. As described above, the functional block may be implemented in any appropriate manner.

For example, each of the terminal 10, the base station 20, and the MME 40 according to the embodiments of this disclosure may function as a computer that performs a radio communication method of this disclosure. FIG. 16 is a diagram illustrating an example of a hardware configuration of each of the terminal 10, the base station 20, and the MME 40 according to an embodiment of this disclosure. Physically, each of the terminal 10, the base station 20, and the MME 40 may be implemented as a computer including a processor 1001, a storage device 1002, an auxiliary storage device 1003, a communication device 1004, an input device 1005, an output device 1006, and a bus 1007.

In the descriptions below, the term "apparatus" may indicate, for example, a circuit, a device, or a unit. The hardware configuration of each of the terminal 10, the base station 20, and the MME 40 may include one or more sets of each device illustrated with reference numerals 1001 to 1006 in the drawing, or may not include some of the devices.

Each function of the terminal 10, the base station 20, and the MME 40 may be implemented by loading predetermined software (program) onto a hardware component such as the processor 1001 or the storage device 1002, and thereby causing the processor 1001 to perform calculations, control communications performed by the communication device 1004, and control at least one of writing and reading of data to or from the storage device 1002 and the auxiliary storage device 1003.

The processor 1001, for example, runs an operating system to control the entire computer. The processor 1001 may be implemented by a central processing unit (CPU) that includes interfaces with peripheral devices, a controller, an arithmetic unit, and registers.

The processor 1001 loads programs (program code), software modules, and data from the auxiliary storage device 1003 and/or the communication device 1004 onto the storage device 1002, and performs various processes according to the loaded programs, software modules, and data. The programs cause the computer to perform at least some of the operations described in the above embodiments. For example, the controller 130 of the terminal 10, the controller 230 of the base station 20, and the controller 430 of the MME 40 may each be implemented by a control program that is stored in the storage device 1002 and executed by the processor 1001. The processes described above may be performed by one processor 1001 or may be performed concurrently or sequentially by two or more processors 1001. The processor 1001 may be implemented by one or more chips. The programs may be received from a network via a telecommunication line.

The storage device 1002 is a computer-readable storage medium and may be implemented by, for example, at least one of a read-only memory (ROM), an erasable programmable ROM (EPROM), an electrically-erasable programmable ROM (EEPROM), and a random access memory (RAM). The storage device 1002 may also be referred to as a register, a cache, or a main memory. The storage device 1002 can store, for example, programs (program code) and software modules that are executable to perform communication methods according to the embodiments of this disclosure.

The auxiliary storage device 1003 is a computer-readable storage medium and may be implemented by, for example, at least one of an optical disk such as a compact-disk ROM (CD-ROM), a hard disk drive, a flexible disk, a magneto-optical disk (e.g., a compact disk, a digital versatile disk, or a Blu-ray (registered trademark) disk), a smart card, a flash memory (e.g., a card drive, a stick drive, or a key drive), a floppy (registered trademark) disk, and a magnetic strip. The storage medium described above may also be implemented by any other appropriate medium such as a database or a server that includes at least one of the storage device 1002 and the auxiliary storage device 1003.

The communication device 1004 is a hardware component (transmitting/receiving device) for communicating with other computers via at least one of a wired network and a wireless network. The communication device 1004 may also be referred to as a network device, a network controller, a network card, or a communication module. The communication device 1004 may include a highfrequency switch, a duplexer, a filter, and a frequency synthesizer to achieve at least one of frequency division duplex (FDD) and time division duplex (TDD).

The input device 1005 receives external inputs and may be implemented by, for example, a keyboard, a mouse, a microphone, switches, buttons, and sensors. The output device 1006 is an external output device (e.g., a display, a speaker, and/or an LED lamp). The input device 1005 and the output device 1006 may be implemented as a single component (e.g., a touch panel).

The above-described devices including the processor 1001 and the storage device 1002 are connected to each other via a bus 1007 for communication. The bus 1007 may be implemented by a single bus, or may be implemented by multiple buses connecting the corresponding devices.

The terminal 10, the base station 20, and the MME 40 may each include hardware components such as a microprocessor, a digital signal processor (DSP), an application specific integrated circuit (ASIC), a programmable logic device (PLD), and a field programmable gate array (FPGA); and some or all of the functional blocks may be implemented by these hardware components. For example, the processor 1001 may be implemented by at least one of these hardware components.

### (Conclusion of the Embodiments)

At least the following terminals and communication methods are disclosed herein.

A base station including
a receiver configured to receive a signal requesting setting of a radio bearer from a network node; and
a controller configured to select one of a process of continuing performing of an E-UTRA-NR Dual Connectivity (EN-DC) process without setting the radio bearer or a process of stopping the performing of the EN-DC process and setting the radio bearer, in response to detecting that the EN-DC process that contends with the setting of the radio bearer is performed.

According to the above configuration, it is possible to eliminate the contention between the setting of the radio bearer and the process of the EN-DC by selecting one of the following processes according to the priority between the setting of the radio bearer and the process of the EN-DC. The following processes include continuing the process of the EN-DC without setting the radio bearer, and stopping the process of the EN-DC to set the radio bearer. The priority between the setting of the radio bearer and the EN-DC process may be set quasi-statically based, for example, on operator policy. The priority between the setting of the radio bearer and the EN-DC process may be set dynamically by higher layer signaling (RRC signaling or the like). The priority between the setting of the radio bearer and the EN-DC process may be specified by a technical specification.

In the base station described above, the controller may prioritize the EN-DC process over the setting of the radio bearer, and selects continuing the EN-DC process without setting the radio bearer.

According to the above configuration, when the setting of the radio bearer contends with the process of the EN-DC, the process of the EN-DC can be prioritized to resolve the contention.

In the base station described above, the controller may prioritize the setting of the radio bearer over the EN-DC process, and selects the setting of the radio bearer by stopping the EN-DC process.

According to the above configuration, when the setting of the radio bearer contends with the EN-DC process, the setting of the radio bearer can be prioritized to resolve the contention.

A network node includes
a receiver configured to receive a signal requesting an E-UTRA-NR Dual Connectivity (EN-DC) process from a base station; and
a controller configured to stop, in response to detecting that setting of a radio bearer that contends with the EN-DC process is performed, the setting of a radio bearer that contends with the EN-DC process, and select performing of the EN-DC process.

According to the above configuration, when the setting of the radio bearer contends with the process of the EN-DC, the process of the EN-DC can be prioritized to resolve the contention. In this case, for example, the network node may be an MME.

A communication method, which is performed by a base station, includes
receiving a signal requesting setting of a radio bearer from a network node; and
selecting, upon detecting that an E-UTRA-NR Dual Connectivity (EN-DC) process that contends with the setting of the radio bearer is performed, one of following steps, according to priority between the setting of the radio bearer and the performing of the EN-DC process, wherein the following steps includes
continuing to perform the EN-DC process without the setting of the radio bearer, and
stopping the performing of the EN-DC process and setting the radio bearer.

According to the above configuration, it is possible to eliminate the contention between the setting of the radio bearer and the process of the EN-DC by selecting one of the following processes according to the priority between the setting of the radio bearer and the process of the EN-DC. The following processes include continuing the process of the EN-DC without setting the radio bearer, and stopping the process of the EN-DC and setting the radio bearer.

### (Supplementary Description of Embodiments)

Embodiments of the present invention are described above. However, the present invention is not limited to the above-described embodiments, and a person skilled in the art may understand that variations, modifications, and replacements may be made to the above embodiments. Although specific values are used in the above descriptions to facilitate the understanding of the present invention, the values are just examples and other appropriate values may also be used unless otherwise mentioned. Grouping of subject matter in the above descriptions is not essential for the present invention. For example, subject matter described in two or more sections may be combined as necessary, and subject matter described in one section may be applied to subject matter described in another section unless they contradict each other. Boundaries of functional units or processing units in functional block diagrams do not necessarily correspond to boundaries of physical components. Operations of multiple functional units may be performed by one physical component, and an operation of one functional unit may be performed by multiple physical components. The order of steps in processes described in the embodiments may be changed as long as the consistency of the steps is maintained. Although functional block diagrams are used to describe the base station 20 and the terminal 10, each of the base station 20 and the terminal 10 may be implemented by hardware, software, or a combination of them. Each of software to be executed by a processor of the base station 20 according to the embodiments of the present invention and software to be executed by a processor of the terminal 10 according to the embodiments of the present invention may be stored in any appropriate storage medium such as a random access memory (RAM), a flash memory, a read-only memory (ROM), an EPROM, an EEPROM, a register, a hard disk drive (HDD), a removable disk, a CD-ROM, a database, or a server.

Information may also be reported using methods other than those described in the above embodiments. For example, information may be reported by physical layer signaling (e.g., downlink control information (DCI) or uplink control information (UCI)), upper layer signaling (e.g., radio resource control (RRC) signaling, medium access control (MAC) signaling, broadcast information (master information block (MIB), or system information block (SIB)), other signals, or a combination of them. Also, RRC signaling may be referred to as an RRC message and may be, for example, an RRC connection setup message or an RRC connection reconfiguration message.

The embodiments described in this disclosure may be applied to at least one of systems employing Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), and any other appropriate system, and a next generation system implemented by extending any one of these systems. Also, the above embodiments may be applied to a combination of multiple systems (e.g., a combination of at least one of LTE and LTE-A and 5G).

The order of steps in sequence charts and flowcharts described in the embodiments may be changed as long as the consistency of the steps is maintained. For example, the order of steps in a method described in the above embodiments is an example and may be changed to any appropriate order.

Specific operations performed by the base station 20 in the present disclosure may be performed by an upper node of the base station 20. In a network comprised of one or more network nodes including the base station 20, various operations performed for communication with the terminal 10 may be performed by at least one of the base station 20 and a network node (which is, for example, but is not limited to, MME or S-GW) other than the base station 20. In the above example, there is one network node other than the base station 20. However, there may be two or more types of network nodes (e.g., MME and S-GW) other than the base station 20.

Information or signals described in this disclosure may be output from an upper layer (or a lower layer) to the lower layer (or the upper layer), and may be input and output via multiple network nodes.

Input/output information may be stored in a specific location (e.g., in a memory), or may be managed using a management table. Input/output information may be overwritten, updated, or added. Output information may be removed. Input information may be transmitted to another apparatus.

In the present disclosure, decision may be made based on a one-bit value (0 or 1) or a truth value (Boolean: true or false), or by comparison of values (e.g., comparison with a predetermined value).

The aspects/embodiments described in this disclosure may be used separately or in any combination, and may also be switched during a process. Predetermined information (e.g., "A is X") may be reported explicitly or implicitly (e.g., by not reporting the predetermined information).

Regardless of whether software is called software, firmware, middleware, a microcode, a hardware description language, or by any other name, software can be interpreted widely to mean a command, a command set, a code, a code segment, a program code, a program, a subprogram, a software module, an application, a software application, a software package, a routine, a subroutine, an object, an executable file, an execution thread, a procedure, or a function.

Also, software, commands, and information may be transmitted and received via a transmission medium. For example, when software is transmitted from a web site, a server, or any other remote source using a wired technology such as a coaxial cable, a fiber optic cable, a twisted pair, or a digital subscriber line (DSL) and/or a wireless technology such as infrared rays or a microwave, at least one of the wired technology and the wireless technology is within the definition of the transmission medium.

Information and signals described in the present disclosure may be represented by using various different technologies. For example, data, instructions, commands, information, signals, bits, symbols, and chips in the above descriptions may be represented by voltages, electric currents, electromagnetic waves, magnetic fields, magnetic particles, optical fields, photons, or any combination of them.

Terms described in the present disclosure and terms necessary to understand the present disclosure may be replaced with terms having the same or similar meanings. For example, a channel and/or a symbol may be replaced with a signal (signaling). Also, a signal may be replaced with a message. A component carrier (CC) may be referred to as a carrier frequency, a cell, or a frequency carrier.

In the present disclosure, the terms "system" and "network" may be used interchangeably. Also, information and parameters described in the present disclosure may be represented by absolute values, may be represented by relative values relative to predetermined values, or may be represented by other types of information. For example, radio resources may be indicated by indices.

The names used for the above-described parameters are not exclusive names. Also, formulas using those parameters are not limited to those disclosed in the present disclosure. Various channels (e.g., PUCCH and PDCCH) and information elements may be identified by any appropriate names. Accordingly, the names assigned to the channels and the information elements do not limit the channels and the information elements in any respect.

In the present disclosure, terms such as "base station (BS)," "radio base station," "base station apparatus," "fixed station," "NodeB," "eNodeB (eNB)," "gNodeB (gNB)," "access point," "transmission point," "reception point," "transmission/reception point," "cell," "sector," "cell group," "carrier," and "component carrier" may be used interchangeably. The base station may also be referred to as a macro cell, a small cell, a Femto cell, or a pico cell.

The base station can accommodate one or more (for example, three) cells. When the base station accommodates multiple cells, the entire coverage area of the base station may be divided into multiple smaller areas, and each of the smaller areas may provide a communication service through a base station subsystem (for example, a small indoor base station (RRH: remote radio head). The term "cell" or "sector" refers to a part or the entirety of the coverage area of at least one of the base station and the base station subsystem that provides a communication service in this coverage.

In this disclosure, the terms "mobile station (MS)," "user terminal," "user equipment UE," and "terminal" may be used interchangeably.

Depending on persons skilled in the art, the mobile station may be called by any other appropriate term such as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client.

At least one of the base station and the mobile station may be referred to as a transmission apparatus, a reception apparatus, or a communication apparatus. At least one of the base station and the mobile station may be a device mounted on a mobile body or the mobile body itself. The mobile body may be a vehicle (e.g., automobile or aircraft), an unmanned mobile body (e.g., drone or self-guided vehicle), or a robot (manned or unmanned). At least one of the base station and the mobile station may be an apparatus that does not move during communications. For example, at least one of the base station and the mobile station may be an Internet of Things (IoT) device such as a sensor.

Also, the base station in the present disclosure may be replaced with a user terminal. For example, aspects/embodiments of the present invention may be applied to a configuration where communications between the base station and the user terminal are replaced with communications (e.g., device-to-device (D2D) or vehicle-to-Everything (V2X) communications) between multiple user terminals. In this case, the user terminal 10 may include functions of the terminal 10. Also, terms such as "uplink" and "downlink" may be replaced with a term such as "side" used in terminal-to-terminal communications. For example, an uplink channel and a downlink channel may be replaced with side channels. In this case, the terminal 10 may include functions of the user terminal 10.

Terms "connected," "coupled," or variations thereof means any direct or indirect connection or coupling between two or more elements and may include the presence of one or more intermediate elements between two elements which are "connected" or "coupled". The coupling or the connection between the elements may be physical, logical, or a combination thereof. For example, "connecting" may be replaced with "accessing." When used in this application, two elements may be considered to be "connected" or "coupled" with each other using one or more electric wires, cables, and/or a printed electrical connection or using electromagnetic energy having a wavelength in a radio frequency region, a microwave region, or an optical (both visible and invisible) region as non-limiting and non-comprehensive examples.

A reference signal may be abbreviated as RS and may be referred to as a pilot depending on a standard to be applied.

In the present disclosure, "based on" does not mean "based only on" unless otherwise mentioned. In other words, "based on" can mean both "based only on" and "based at least on".

In the present disclosure, terms such as "first" and "second" used to refer to elements do not generally indicate the quantity or the order of those elements. In the present disclosure, such terms may be used to distinguish two or more elements from each other. Accordingly, a first element and a second element do not necessarily indicate that there are only two elements and that the first element needs to come before the second element.

In the present disclosure, similar to the term "comprising," the terms "include" and "including" and variations thereof are open-ended terms. Also, in the present disclosure, the term "or" does not indicate exclusive OR.

In the present disclosure, when an article "a," "an," or "the" is attached to a noun in the English translation of the present disclosure, the noun following the article may indicate plural elements.

In this disclosure, "A and B are different" may indicate that "A and B are different from each other" or "A and B are different from C". This also applies to terms such as "separate" and "coupled".

The embodiments of this disclosure are described above in detail. However, it is obvious to a person skilled in the art that this disclosure is not limited to the above-described embodiments. Variations and modifications may be made to the embodiments without departing from the scope of this disclosure defined by the claims. Thus, the above-described embodiments are examples and are not intended to limit the present invention.

### LIST OF REFERENCE SYMBOLS

- 10: terminal
- 110: transmitter
- 120: receiver
- 130: controller
- 20: base station
- 210: transmitter
- 220: receiver
- 230: controller
- 40: MME
- 410: transmitter
- 420: receiver
- 430: controller
- 1001: processor
- 1002: storage device
- 1003: auxiliary store device
- 1004: communication device
- 1005: input device
- 1006: output device

### Further embodiments are as followed:

E1. A base station comprising:
   a receiver configured to receive a signal requesting setting of a radio bearer from a network node; and
   a controller configured to select one of a process of continuing performing of an E-UTRA-NR Dual Connectivity (EN-DC) process without setting the radio bearer or a process of stopping the performing of the EN-DC process and setting the radio bearer, in response to detecting that the EN-DC process that contends with the setting of the radio bearer is performed.
E2. The base station according to E1, wherein
   the controller prioritizes the EN-DC process over the setting of the radio bearer, and selects continuing the EN-DC process without setting the radio bearer.
E3. The base station according to E1, wherein
   the controller prioritizes the setting of the radio bearer over the EN-DC process, and selects the setting of the radio bearer by stopping the EN-DC process.
E4. A network node comprising:
   a receiver configured to receive a signal requesting an E-UTRA-NR Dual Connectivity (EN-DC) process from a base station; and
   a controller configured to stop, in response to detecting that setting of a radio bearer that contends with the EN-DC process is performed, the setting of the radio bearer, and select performing of the EN-DC process. E5. A communication method performed by a base station, the communication method comprising:
   receiving a signal requesting setting of a radio bearer from a network node; and
   selecting one of a process of continuing performing of an E-UTRA-NR Dual Connectivity (EN-DC) process without setting the radio bearer or a process of stopping the performing of the EN-DC process and setting the radio bearer, in response to detecting that the EN-DC process that contends with the setting of the radio bearer is performed.

## Claims

1. A base station (20) comprising:
a transmitter (210) configured to transmit, to a network node (40), a signal to request a modification of a radio bearer in E-UTRA-NR Dual Connectivity, EN-DC;
a controller (230) configured to cause the network node (40) to modify the radio bearer even if a procedure to modify another radio bearer is performed, the procedure being requested by the network node (40); and
a receiver (220) configured to receive a response to the signal from the network node (40).

2. A network node (40) comprising:
a receiver (420) configured to receive a signal to request a modification of a radio bearer from a base station (20) in E-UTRA-NR Dual Connectivity, EN-DC;
a controller (430) configured to modify the radio bearer even if a procedure to modify another radio bearer is performed, wherein the network node (40) requests the base station (20) to perform the procedure; and
a transmitter (410) configured to transmit a response to the signal to the base station.

3. A communication system comprising:
the base station (20) according to claim 1; and
the network node (40) according to claim 2.

4. A communication method performed by a base station (20), the method comprising:
transmitting, to a network node (40), a signal to request a modification of a radio bearer in E-UTRA-NR Dual Connectivity, EN-DC;
causing the network node (40) to modify the radio bearer even if a procedure to modify another radio bearer is performed, the procedure being requested by the network node (40); and
receiving a response to the signal from the network node (40).
